# EUROPEAN PATENT SPECIFICATION

(11) **EP 2 692 503 B1**
(45) Date of publication and mention of the grant of the patent: **11.12.2019**
(21) Application number: 13176979.6
(22) Date of filing: 18.07.2013
(51) Int. Cl.: B29C 45/04, B29L 31/42

(54) **Injection molding device comprising a conveying tool**
Spritzgießvorrichtung mit Förderwerkzeug
Dispositif de moulage par injection comprenant un outil de transport

(30) Priority: 01.08.2012 EP 12178862
(43) Date of publication of application: 05.02.2014
(73) Proprietor: Braun GmbH, 61476 Kronberg (DE)
(72) Inventor: Kotitschke, Jörg, 61476 Kronberg/Taunus (DE); Scheurich, Stefan, 97828 Marktheidenfeld (DE); Tretrop, Uwe, 61476 Kronberg/Taunus (DE); Frey, Hermann, 61476 Kronberg/Taunus (DE)
(74) Representative: P&G Patent Germany

(56) References cited:
- JP-A- S5 772 832
- US-A- 2 433 654
- US-A- 3 209 407
- US-B1- 6 210 148
- N N: "Parallel Prozessschritte mit wandernden Werkzeugen", KUNSTSTOFFE, CARL HANSER VERLAG, MUNCHEN, DE , no. 2 1 February 2011 (2011-02-01), pages 50-51, XP002669285, ISSN: 0023-5563 Retrieved from the Internet: URL:http://www.kunststoffe.de/KU110708

## Description

### FIELD OF THE INVENTION

A molding device comprising a conveying tool may be disclosed herein which can be used for transporting a mold comprising at least one first and one second mold half into, through and out of the molding device thereby allowing at least one of the mold halves to be manipulated outside and inside of the molding device. A method using the molding device comprising the conveying tool may prepare one mold half outside the molding device with objects to be over-molded and may allow after-molding handling of the molded objects. The direct transport may be performed by moving mold halves to be moved by one moving step due to a continuous arrangement.

### BACKGROUND OF THE INVENTION

Anchor-free methods are known to fasten cleaning elements, such as bristle tufts, in a toothbrush head or in a part of it, such as in a bristle carrier. The anchor-free or hot-tufting methods fasten the cleaning elements in the brush head by means of a forming technique. Cleaning elements made of materials which are combinable with the material used for the brush head may be securely fastened by a chemical connection. Cleaning elements made of other materials, such as bristle tufts may be melted at their ends to form thickenings which can be over-molded and form undercuts in the melted brush head. The chemical connection or the undercuts are used to increase the pull-out resistance of the cleaning elements.

In order to over-mold the cleaning elements, the ends to be over-molded have to be arranged in such that the plastic material can surround and enclose these ends during the molding-procedure. Therefore the cleaning elements have to be provided by carriers which are transferred into and through the molding device, e.g. being part of the mold itself. These carriers have to be transported using a conveying tool. Transfer time and geometric requirements have to be adapted to fast operating molding devices. Rapid changes between different carriers are needed as well as a fast and robust transport system. Thus, there is a need for a flexible conveying system which can be used in molding device transporting carriers which are part of the mold.

Document US 6 210 148 describes an injection-molding apparatus having a mold having a first and a second mold section. The apparatus is arranged for rapid exchange of the second mold section with a further mold section. The apparatus has a transport device for this rapid exchange. The transport device comprises a conveyor belt carrying a plurality of coupling members, which can be coupled with the second mold section and the further mold section. Once driven, the conveyor belt moves the second mold section away from a base and at the same time positions the further mold section above the base.

Document US 2 433 654 describes a molding machine having a first die member and a pair of second movable die members that are alternately slidable onto and off from a ram. Gibs are provided for guiding the second die members onto and off from the ram. The second die members are arranged so that a first one of them can be slit onto the ram to push the other second die member in back of a door, so that the first of the second die members is properly located on the ram by engagement of a detent in a notch.

Document US 3 209 407 describes a device for facilitating the retouching the surfaces of molds. The device comprises an injection unit with a mold half fixed thereto. Another mold half intended for retouching is arranged on a carriage via which it can be introduced into a press to become lifted until it engages with the fixed mold half. Prior to the movement, the mold half on the carriage can be retouched on a working table. After the injection step, the carriage is moved out onto the working table again.

### SUMMARY OF THE INVENTION

According to one aspect a molding device for manufacturing of at least one injected plastic object is provided in accordance with claim 1.

According to one aspect a molding device for manufacturing of at least one injected plastic object is provided in accordance with claim 2.

According to another aspect there is disclosed a method of transferring at least one second mold half into, through and out of a molding device using a conveying tool in accordance with claim 9.

### BRIEF DESCRIPTION OF THE DRAWINGS

- Figure 1A: shows a schematic side view of a mold having two mold cavities, wherein cleaning elements are provided in order to be over-molded;
- Figure 1B: shows a schematic side view of the mold shown in Fig. 1A in an open state, wherein a brush head was formed by injection-molding;
- Figure 2: shows a schematic side view of an opening/closing mechanism to open and close the mold shown in Fig. 1;
- Figures 3A-3E: show a complete molding cycle in a mold device, wherein one of the mold halves is moved with a conveying tool, wherein the individual figures show:

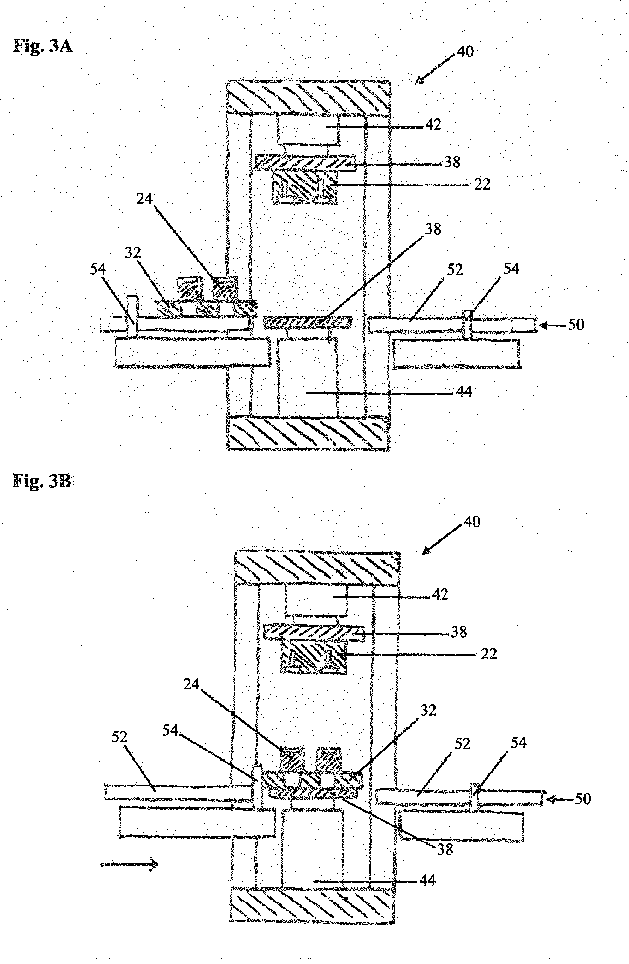

- Figure 3A: a schematic side view of a molding device in an open state, wherein a first mold half is arranged inside and a second mold half is arranged outside of the molding device on a conveying tool in order to be filled with objects to be over-molded;
- Figure 3B: shows a schematic side view of the molding device, wherein first and second mold halves are arranged inside the molding device in an open state of the molding device before the molding process;

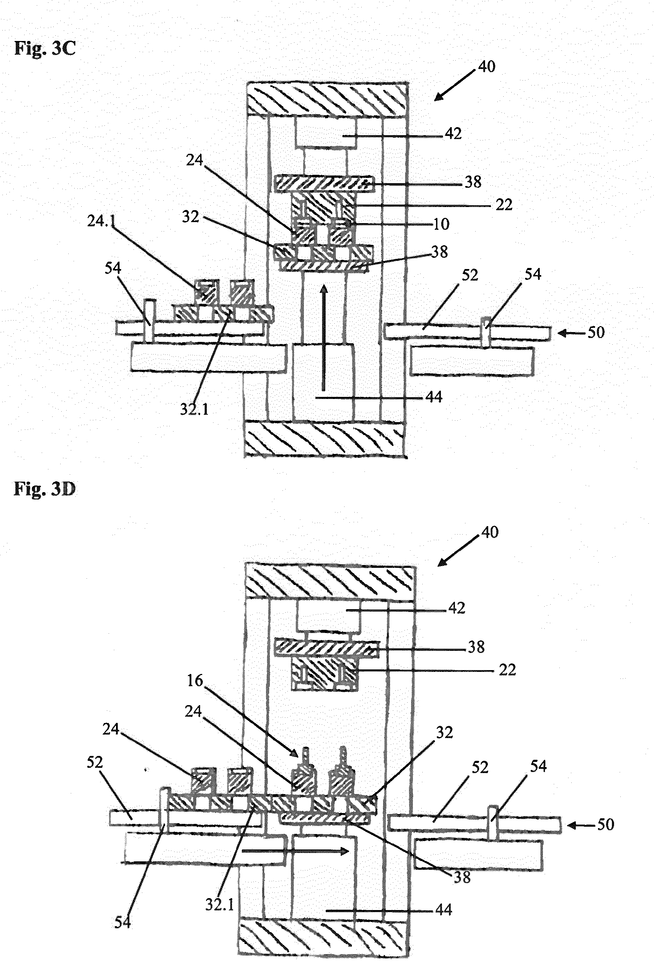

- Figure 3C: shows a schematic side view of of the molding device, in a closed state before or during the molding process;
- Figure 3D: shows a schematic side view of the molding device, wherein first and second mold halves are arranged inside the molding device in an open state of the molding device after the molding process and a second second molding device is arranged outside the molding device in order to be translocated inside of the molding device; and

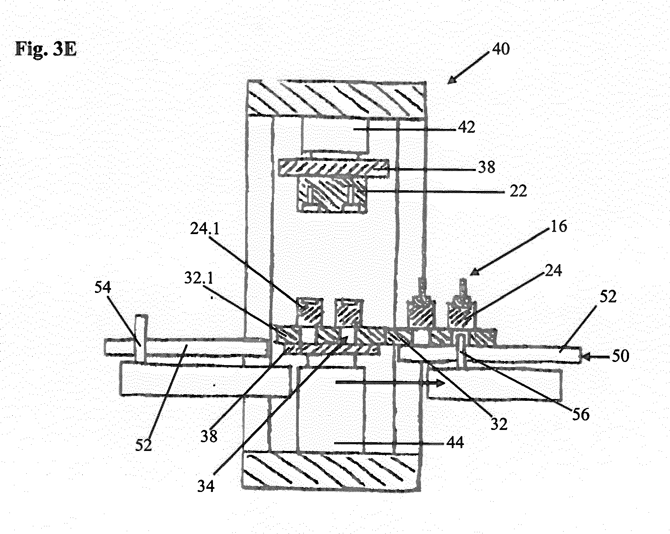

- Figure 3E: shows a schematic side view of he molding device, wherein the first second mold half is removed from the molding device and the second second mold half is arranged inside the modling device together with the first mold half suitable for a second molding cycle.

### DETAILED DESCRIPTION OF THE INVENTION

The following is a description of numerous embodiments of a conveying tool being part of an injection molding device and a method of transporting a part of a mold into, through and out of a molding device. The description is to be construed as exemplary only and does not describe every possible embodiment since describing every possible embodiment would be impractical, if not impossible, and it will be understood that any feature, characteristic, structure, component, step or methodology described herein can be deleted, combined with or substituted for, in whole or in part, any other feature, characteristic, structure, component, product step or methodology described herein.

In accordance with one aspect of the disclosure, there is provided a molding device for manufacturing of at least one injected plastic object comprising a conveying tool for transporting at least one second mold half into, through and out of the molding device so that the at least one second mold half can be handled and manipulated outside of the molding device before the molding, inside the molding device and outside of the molding device after the molding process. During transportation more than one second mold half are arranaged on the conveying tool and the second mold halfs are all translocated simultaneously.

The molding device may be arranged horizontally, meaning that a lower half of the molding device is placed on the ground and an upper half is placed above the lower one. The upper half may be movable up and down to open and to shut the molding device. Alternatively, the molding device may be arranged vertically, meaning that the opening plane of the molding device is arranged substantially perpendicular to the ground. In this embodiment, at least one of the two halves of the molding device may be movable in parallel to the ground to open and to shut the molding device. In addition or alternatively, the opening plane may be arranged at an angle to the ground, wherein the angle is from about 0 to about 90 degree to the ground. In this embodiment, at least one of the two halves of the molding device may be movable on a plane angled to the ground to open and to shut the molding device.

The mold cavity of the molding device into which plastic material can be injected in order to form a plastic object may be formed by two or more parts. For example, the mold cavity may be formed by a first mold half and a second mold half. "A mold half' as used herein shall mean any part which forms a limiting wall or a part thereof of the molding cavity. For example, a first and a second mold halves may be a half of a mold forming the mold cavity. In addition or alternatively, the first mold half may be arranged permanently inside the molding device and the second mold half may be transported inside, through and out of the molding device. More than one, for example a plurality of second mold halves is transported inside, through and out of the molding device. The second mold half may be used thereby as a carrier system for the molded articles. In addition or alternatively, the second mold half may be a mold bar or any other carrier for carrying elements to be over-molded in the molding device. During over-molding the elements may be integrated into the molded article. Elements to be integrated into the molded article are for example cleaning elements which are over-molded at one end. The cleaning-elements may be provided to the mold cavity by the second mold half in order to embed the cleaning elements into a brush head or a part thereof which shall be molded in the molding cavity of the molding device. Suitable carriers which may be transported with a conveying tool as disclosed herein are for example disclosed in European application EP 12 172 532.9 which subject matter is incorporated herein by reference. The conveying tool as disclosed herein shall be able to transport or transfer at least the second mold halves. The plastic material will be injected into the molding cavity via injection nozzles. Thus, the molding device further comprises at least one injection nozzle.

The conveying tool comprises a base level supporting plate comprising at least three parts, wherein a middle part of the base level supporting plate which is locatable inside of the molding device is movable independently from the two side parts which are locatable outside of the molding device. That means the base level supporting plate is interrupted twice so that the middle part of the base level supporting plate which is locatable inside of the molding device is movable independently from the side parts which are locatable outside of the molding device. Being "movable independently" as used herein shall comprise any three dimensional movement which is possible inside the molding device. The middle part of the base level supporting plate, namely the part of the base level supporting plate which is located inside the molding device may be a pressure plate. "Pressure plate" as used herein shall comprise any plate which is able to resist and to equalize the pressure applied to a mold during injection molding procedure. The pressure plate may be pressed against one of the mold halves or any supporting structure, e.g. a carrier, which is carrying one of the mold halves or a part thereof. In addition or alternatively, the pressure plate may be movable three-dimensionally inside of the molding device in any direction.

The base level supporting plate may be located inside or outside of the opening plane of the molding device. For example if the opening plane is arranged horizontally, the base level supporting plate may be arranged below, above or at the level of the opening plane. In addition or alternatively, the base level supporting plate may be arranged horizontally, vertically or inclined in the molding tool. Being arranged "horizontally, vertically or inclined in the molding tool" as used herein shall mean being arranged horizontally, vertically or inclined compared to the opening plane of the molding tool. In particular, the base level supporting plate is located in the molding device in such that the molds, in particular the second maid half, can be transferred into, through and out of the molding device easily.

In addition or alternatively, the base level supporting plate may be a rail system and/or a splint system. In addition or alternatively, the base level supporting plate may comprise at least one fastening unit. The fastening unit may fix the second mold half or the carrier carrying the second mold half during transportation into, through and out of a molding device. The fastening unit may be a clamp or a screw or a combination of both.

The conveying tool shall also comprise at least one sliding unit which is arranged at one of the side parts of the base level supporting plate, wherein the sliding unit is arranged on the conveying tool in that the free space between the sliding unit and the position of the second mold half inside of the molding device is an integral number multiple, for example twice or more of the area covered by one second mold half on the conveying tool. That means one second mold half may be arranged inside of the molding device and one or more second mold halves can be arranged between the molding device and the at least one sliding unit. Thereby, the second mold halves are in direct contact to each other. Alternatively, the second mold halves may be arranged on a supporting means, such as a carrier. One or more second mold halves may be arranged on on carrier. Said carrier may be a base plate or any other suitable structure able to carry one or more second mold halves and being transportable with a conveying tool as described herein. If the second mold halves are arranged on a carrier the free space between the sliding unit and the position of the second mold half inside of the molding device being placed on a carrier is an integral numbermultiple, for example twice or more of the area covered by carrier on the conveying tool. That means one second mold half being arranged on a carrier may be arranged inside of the molding device and one or more second mold halves being arranged on one or more carriers can be arranged between the molding device and the at least one sliding unit. Thereby, the carriers are in direct contact to each other. In addition or alternatively, the position of the sliding unit on the base level supporting plate may be adaptable to the size of the second mold halves and/or to the size of the carriers onto the second mold halves are arranged. In all embodiments the position of the sliding unit is choosen in such that all second mold halves and/or all carriers arranged between the sliding unit and the molding device are in direct contact to each other so that any movement of the sliding unit is transferred to all second mold halves and/or all carriers simultaneously.

The sliding unit may be movable along the base level supporting plate in both directions. In addition or alternatively, the sliding unit may be able to move all second mold halves which are arranged between the sliding unit and the molding device parallel in one moving step. During said moving step one second mold half is arranged inside the molding device by pushing all second mold halves and/or all carriers being placed on the conveying tool using the sliding unit simulatneously.

The conveying tool as disclosed herein may further comprise a positioning unit which positions the second mold half inside the molding device. After being moved into the molding device a positioning unit may arrange the second mold half in the exact molding position. In doing so the positioning unit may be movable three-dimensionally inside the molding device to position the second mold half exactly. That means for example, the positioning unit may position the second mold half in the opening plane laterally or may move the second mold half outside the opening plane of the molding device into a molding position. In addition or alternatively, the positioning unit may be a pressure unit which is able to press halves of a mold cavity together in order to shut the mold cavity during the material injection.

The conveying tool may comprise at least one sliding unit on more than one side of the molding device, for example on two sides of the molding device. Having a sliding unit on more than one sides of the molding device allows the molding device to be filled from more than one side. For example, a sliding unit may be arranged on two opposite sides of the molding device. In addition or alternatively, the sliding units may be arranged on the base level supporting plate outside the molding device in a waiting position.

In addition or alternatively, the conveying tool may comprise at least one translocation unit which is suitable to remove the second mold halves from the molding device after molding. Said removing movement may be a combined passive and active movement. The passive movement may be the translocation vai the sliding unit as the second mold half is transported by the sliding unit pushing one second mold half inside of the molding device and automatically another second mold half out of the molding device. In addition an active movement may be performed by the translocation unit. For example, the translocation unti may remove the second mold half from the conveying tool. In addition or alternatively, one of the sliding units may be a translocation unit. Alternatively, one of the sliding units may be both, a sliding unit and a translocation unit. Such a sliding unit may be movable in both directions along the base level supporting plate and may transfer the part of the mold actively away from the molding device and/or the conveying tool after the second mold half was pushed out from the molding device.

According to another aspect a method for transferring at least one second mold half into, through and out of a molding device is provided. Said method comprises the step of placing an integer number of second mold halves or second mold halves being carried by one or more carriers into the free space between a sliding unit and the molding device so that one second mold half or one of the carriers is located adjacent to the sliding unit, one second mold half or one of the carriers is located adjacent to the molding device and all second mold halves or all carriers are in direct contact to each other. That means if more than two second mold halves are placed on the conveying tool these parts are also in direct contact to each other. If only two second mold halves are placed between the sliding unit and the molding device, both second mold halves are in direct contact to each other. If the second mold halves arranged on carriers, the carriers are arranged in direct contact to each other on the conveying tool.

In addition, the method comprises transferring the first second mold half or the first carrier which is located adjacent to the molding device into the molding device by moving the sliding unit a predefined distance in the direction of the molding device. Said predefined distance may correspond to the distance covered by one second mold half or the carrier carrying one or more second mold halves. That means the predefined distance is the area covered by one second mold half or one carrier carrying at least one second mold half. The second mold half which has been transferred into the molding device may further be positioned into the molding position inside the molding device so that the molding process may take place. In addition or alternatively the step of positioning the second mold half into the molding position may comprise transferring the second mold half to another level compared to the level onto the second mold half is transported by the conveying tool. For example, the molding position may be located outside of the opening plane, in particular the molding position may be located above or below the opening plane. If the molding position is located outside the opening plane the transport of the second mold half may be performed during the molding in the molding device. Parallel molding and transporting would be less time consuming than successive molding and transporting. The parallel process may be used in time critical molding procedures.

After molding the second mold half is removed from the molding device by moving the sliding unit an additional predefined distance in the direction of the molding device so that a first second mold half is removed from the molding device, a second second mold half is moved into the molding device and a third second mold half is moved adjacent to the molding device. That means the predefined distance moved by several moving steps is identical. In addition or alternatively the second mold half may be grasped by a translocation unit during removing it from the molding device. That means the second mold half can be removed actively from the conveying tool or may be removed only by passive pushing using the sliding unit. In addition, passive and active movement may be combined. For example, the second mold half may be moved out from the molding device using the movement of all second mold halves and after it has been moved away from the molding device one, two or more moving cycles, the second mold half may be removed from the conveying tool using the translocation unit.

In the method as described herein a mold half is used as part of mold. Said mold half may be carried by a base plate which may support more than one mold half. In addition or alternatively, the mold half, in particular the second mold half may carry at least one cleaning element to be over-molded in the molding device to produce a toothbrush or a part thereof. Suitable cleaning elements are for example bristle filaments, tufts of bristle filaments, elastomeric elements or mixture thereof.

According to another aspect a method for transferring at least one second mold half into, through and out of a molding device is provided which uses a conveying tool as disclosed herein.

In the following, a detailed description of several example embodiments will be given. It is noted that all features described in the present disclosure, whether they are disclosed in the previous description of more general embodiments or in the following description of example embodiments, even though they may be described in the context of a particular embodiment, are of course meant to be disclosed as individual features that can be combined with all other disclosed features as long as this would not contradict the gist and scope of the present disclosure. In particular, all features disclosed for either one of the molding device, the mold halves, the conveying tool or the method for transporting at least a second mold half into, through and out of the molding device using said conveying tool may also be applied to the other one, if applicable.

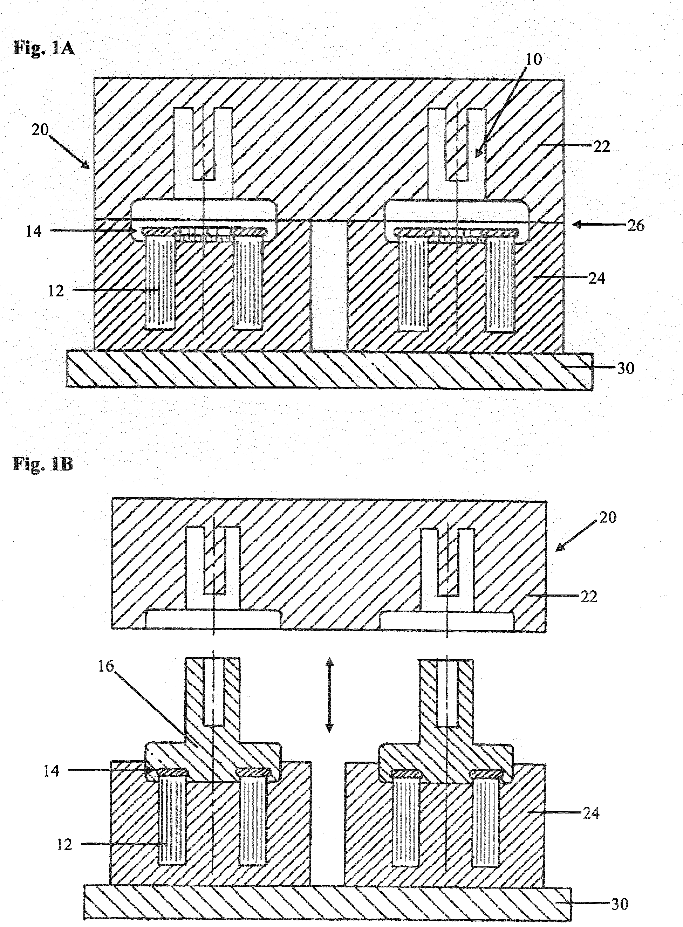

Fig. 1A shows an example embodiment of a mold 20 comprising at least two mold halves 22, 24 in a closed state. A sectional view is shown. A first mold half 22 may be arranged adjacent to a second mold half 24. The mold halves 22, 24 may be arranged in direct contact to each other in an opening plane 26. The mold halves 22, 24 form a mold cavity 10. Objects which shall be embedded into plastic material may be arranged at least partially inside of said mold cavity 10. For example, cleaning elements 12 may be partially arranged inside of the mold cavity 10. If said cleaning elements 12 are over-molded with plastic material a brush head or at least a part of a brush head may be produced. Said molded brush head may be for example a toothbrush head or a part thereof. In addition or alternatively, the cleaning elements 12 may be bristle tufts. If bristle tufts 12 shall be embedded into plastic using injection-molding the ends to be embedded may be reshaped to form thickenings 14. During over-molding the thickenings 14 become under-cuts fastening the bristle tufts 12 in the plastic material securely.

The mold 20, for example the second mold half 24 may be arranged on a carrier plate 30. Said carrier plate 30 may carry more than one mold 20. For example 4, 8, 16, 32 or 64 molds can be carried by one carrier plate 30.

Fig. 1B shows the mold 20 as shown in Fig. 1A after injection of a plastic material. All features disclosed in Fig. 1A, whether described individually or in combination are also applicable to the embodiment shown in Fig. 1B. Features that are in common with the mold 20 shown in Fig. 1A are designated with the same reference numerals. The mold 20 is shown in an open state. The first mold half 22 was removed from the second mold half 24 at the opening plane. A plastic material had been injected into the mold cavity 10 in order to form an object 16 comprising the outer shape of the mold cavity 10. The object 16 may be a brush head, in particular a toothbrush head or a part thereof, such as a bristle carrier.

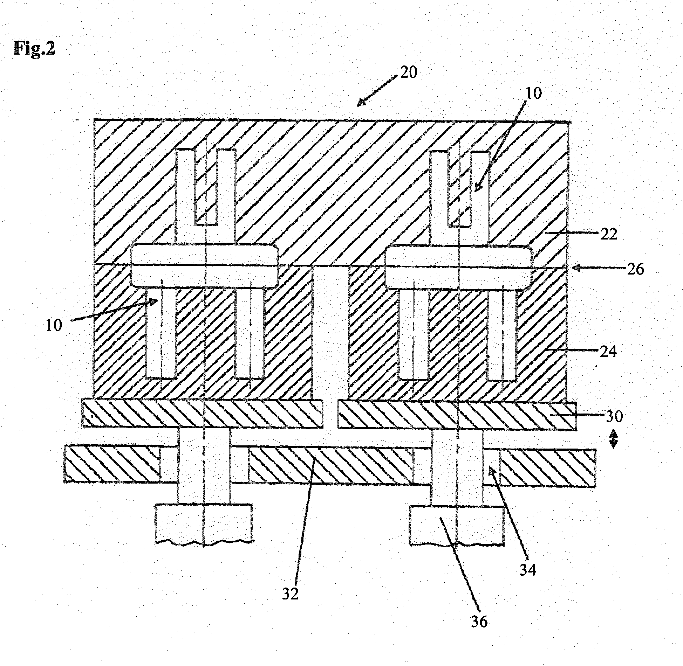

Fig. 2 shows as an opening/closing mechanism to open and close the mold 20 in the opening plane 26. A sectional view of the mold 20 is shown. All features disclosed in Fig. 1, whether described individually or in combination are also applicable to the embodiment shown in Fig. 2. Features that are in common with the mold 20 shown in Fig. 1 are designated with the same reference numerals. The mold 20 is shown in the closed state. The mold cavity 10 is shown in an empty state. Objects, such as cleaning elements may be arranged in parts of the mold cavity 10 to be embedded into plastic material using injection-molding.

Two or more molds 20 may be arranged at a base plate 32. The molds 20 may be located directly on the base plate 32 or the molds 20 may be arranged on a carrier plate 30. For example the second mold half 24 may be arranged on the base plate 32 or the carrier plate 30. The molds 20 may be arranged on the carrier plate(s) 30 and/or the base plate 32 using clamping or fixation means, such as screws or clamps. In one embodiment, the molds 20 may be arranged permanently on the carrier plate(s) 30 and movable on the base plate 32. The base plate 32 may comprise through holes 34 in which pressure units 36 may be arranged. The pressure unit 36 may be a hydraulic plunger, a spring, a pneumatic plunger or an actuator. The pressure unit 36 may be used to press the second mold half 24 against the first mold half 22 in order to securely close the mold 20 at the opening plane 26. After plastic material has been injected and has at least partially solidified the pressure unit 36 may be removed from the carrier plate 30. Simultaneously or afterwards, the mold 20 may be opened by moving the carrier plate 30 in the direction of the base plate 32 whereby the second mold half 24 is removed from the first mold haf 22. In addition the first mold half 22 may be removed from the second mold half 24 in the opposite direction. After the mold 20 was opened the molded object 16 may be removed from the mold 20 for final cooling.

Fig. 3A shows an example embodiment of a conveying tool 50 suitable to transport a mold 20 into, through and out of a horizontal molding device 40. A sectional view of the molding device 40 is shown. All features disclosed in Figs. 1 and 2, whether described individually or in combination are also applicable to the embodiment shown in Fig. 3A. Features that are in common with the molds 20 shown in Figs. 1 and 2 are designated with the same reference numerals. A molding device 40 is shown having a horizontal opening plane. A first mold half 22 may be attached to a first opening/closing unit 42. The first opening/closing unit 42 may be able to arrange the first mold half 22 between an open state and a closed state. In an open state the first mold half 22 may be arranged outside the opening plane of the molding device 40. In a closed state the first mold half 22 may be arranged in the opening plane of the molding device 40 being in direct contact with a second mold half 24 to form the mold cavity 20. The first mold half 22 may be attached directly to the first opening/closing unit 42. Alternatively, a pressure plate 38 may be arranged between the first mold half 22 and the first opening/closing unit 42. The pressure plate 38 may equalize the pressure applied by the first opening/closing unit 42 to the first mold half 22. The second mold half 24 may be located inside or outside of the molding device 40 during the transport by the conveying tool 50. If the second mold half 24 is located inside the molding device 40 it may be attached to a second opening/closing unit 44. The second opening/closing unit 44 may be able to arrange the second mold half 24 between an open state and a closed state. In an open state the second mold half 24 may be arranged inside the opening plane of the molding device 40, but does not show any contact to the first mold half 22. In a closed state the second mold half 24 may be arranged in the opening plane of the molding device 40 being in direct contact with the first mold half 22 to form the mold cavity 20.

Fig. 3A shows the second mold half 24 before it is transferred into the molding device 40 by the conveying tool 50. If the second mold half 24 is located outside the molding device 40 objects for example cleaning elements to be over-molded in the second mold half 24 may be arranged therein. The conveying tool 50 is arranged in the mold device 40 in that the second mold half 24 can be handled and manipulated outside the molding device 40 before the molding, inside the molding device 40 and outside the molding device 40 after the molding. Therefore the conveying tool 50 can be arranged in that the second mold half 24 is arranged at the correct level in an open state of the molding device 40.

The conveying tool 50 may comprise a base level supporting plate 52 onto which one or more sliding units 54 may be arranged. The base level supporting plate 52 may be a rail or splint system. The conveying tool 50 may comprise a sliding unit 54 on two sides of the molding device 40 which may be opposite to each other. The sliding units 54 are suitable to move the second mold half 24 into, through and out of the molding device 40. The direction of movement should be in both directions between the two sliding units 54. Inside the molding device 40 the base level supporting plate 52 may be interrupted. The middle part of the base level supporting plate may be formed as a movable pressure plate 38 which is arranged at the level of the two site portions of the base level supporting plate 52. The pressure plate 38 can be arranged at the second opening/closing unit 44 and can be used to equalize the pressure applied by the second opening/closing unit 44 to the second mold half 24. The molding device 40 is shown in an open state and at least one second mold half 24 is located outside of the molding device 40. The second mold half 24 representing the carrier which provides the objects to be over-molded inside of the molding device 40 is shown here being placed on a base plate 32. The base plate 32 may be located on the base level supporting plate 52 adjacent to one of the sliding units 54. The sliding units 54 may be positioned on the base level supporting plate 52 in that at least one second mold half 24 or the at least one second mold half 24 together with a base plate 32 can be arranged between the sliding unit 54 and the molding device 40.

Fig. 3B shows the example embodiment of the molding device 40 shown in Fig. 3A in a sectional view after the second mold half 24 was transferred into the molding device 40. All features disclosed in Figs. 1 to 3A, whether described individually or in combination are also applicable to the embodiment shown in Fig. 3B. Features that are in common with the molds 20 shown in Figs. 1 and 2 and the molding device 40 shown in Fig. 3A are designated with the same reference numerals. The sliding unit 54 was transferred in the direction of the molding device 40 thereby relocating the second mold half 24 together with the base plate 32 into the molding device 40. The molding device 40 is shown in an open state. The base plate 32 is now arranged on the pressure plate 38.

Fig. 3C shows the example embodiment of the molding device 40 shown in Figs. 3A and B in a sectional view after the mold halves 22, 24 were closed in order to form the mold cavity 10. All features disclosed in Figs. 1 to 3B, whether described individually or in combination are also applicable to the embodiment shown in Fig. 3C. Features that are in common with the molds 20 shown in Figs. 1 and 2 and the molding device 40 shown in Figs. 3A and B are designated with the same reference numerals. A mold cavity 10 is formed by the first mold half 22 and by one second mold half 24 being located in the molding device 40, wherein the first mold half 22 and the second mold half 24 are in direct contact to each other. Closing of the mold 20 may be performed by pressing the pressure plates 38 to the mold halves 22, 24 using the opening/closing units 42, 44. In the example shown in Fig. 3C the second opening/closing unit 44 moves the pressure plate 38 carrying the second mold half 24 upwards until the first and second mold halves 22, 24 stay in direct contact to each other. In addition or alternatively, the pressure plate 38 carrying the first mold half 22 may be moved downwards using the first opening/closing unit 42. In addition or alternatively, both pressure plates 38 may be moved simultaneously or successively moving a different or an equal amount. Plastic material can be injected into the mold cavity 10. During injecting the plastic material into the mold cavity 10 a second base plate 32.1 carrying another second mold half 24.1 may be placed onto the base level supporting plate 52 outside the molding device 40. The second second mold half 24.1 may carry the objects to be over-molded for the next molding cycle. Thereby, the molding time can be reduced as the objects to be over-molded can be prepared and arranged into the second mold half 24 outside the molding device 40 and without interfering the molding cycle. The second second mold half 24.1 is arranged on the base level supporting plate 52 in such the first and second second mold half 24, 24.1 and/or the first and second base plate 32, 32.1 are arranged in direct contact to each other so that any movement of the sliding unit 54 moves all second mold halves 24 which are arranged on the base level supporting plate 52.

Fig. 3D shows the example embodiment of the molding device 40 shown in Figs. 3A to C after the molding step. A sectional view of the molding device 40 is shown in an open state. All features disclosed in Figs. 1 to 3C, whether described individually or in combination are also applicable to the embodiment shown in Fig. 3D. Features that are in common with the molds 20 shown in Figs. 1 and 2 and the molding device 40 shown in Figs. 3A to C are designated with the same reference numerals. An object 16 comprising the outer shape of the mold cavity 10, being for example a brush head or a part thereof, was formed in the mold cavity 20. Thus, the outline of the object 16 corresponds to the mold cavity 10. The object 16 is partially located in the second mold half 24 being arranged on the base plate 32. The base plate 32 can be arranged on the pressure plate 38. The pressure plate 38 now represents the middle portion of the base level supporting plate and is therefore arranged on the same level than the site portions of the base level supporting plates 52 outside of the molding device 40. The second base plate 32.1 carrying the second second molding half 24.1 is arranged in direct contact to the first base plate 32 carrying the first second mold half 24. The sliding unit 54 is located in direct contact to the second base plate 32.1 so that any movement of the sliding unit 54 is transferred to both second mold halves 24, 24.1.

Fig. 3E shows the example embodiment of the molding device 40 shown in Figs. 3A to D after the molded objects 16 are removed from the molding device 40. A sectional view of the molding device 40 is shown in an open state. All features disclosed in Figs. 1 to 3D, whether described individually or in combination are also applicable to the embodiment shown in Fig. 3E. Features that are in common with the molds 20 shown in Figs. 1 and 2 and the molding device 40 shown in Figs. 3A to D are designated with the same reference numerals. The first second molding half 24 was removed from the molding device 40 by transporting the second base plate 32.1 carrying the second second mold half 24.1 into the molding device 40. Due to the direct contact between the first and second base plate 32 and 32.1 the first base plate 32 is moved automatically out of the molding device as soon as the second base plate 32.1 is moved in. The sliding unit 54 is arranged the starting position so that another base plate 32 may be located on the base level supporting plates 52 outside of the molding device 40 and between the sliding unit 54 and the second base plate 32.1 so that the relocation and molding cycle is repeated. Principally, the translocation of the second mold halves 24 and/or the base plates 32 may be in both direction depending on the periphery of the molding device 40. If a bidirectional translocation is needed on both ends of the base level supporting plate 52 a sliding unit 54 may be arranged. The exact position of the sliding unit 54 depends on the number of second mold halve 24 and/or base plates 32 which shall be placed inbetween.

Only one sliding unit 54 is shown in Fig. 3E on the left side of the molding device 40. On the ejecting side of the molding device 40 a translocation unit 56 may be arranged which is able to remove the second mold half 24 and/or the base plate 32 from the conveying tool 50. That means after the second mold half 24 was relocated from the molding device 40 by pushing one second mold half 24 into the molding device 40 it may be further translocated or removed from the conveying system 50 using a translocation unit 56. After the second mold half 24 and/or the base plate 32 have been removed they may be transported into further manipulating devices, such as cooling devices. In addition or alternatively, the objects 16 may be removed from the second mold half 24 and the second mold half 24 may be refilled again with further objects to be over-molded.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm.

## Claims

1. A molding device (40) for manufacturing of at least one injected plastic object (16) comprising
- at least one mold (20) comprising a first mold half (22) and a second mold half (24) forming a mold cavity (10),
- at least one additional second mold half (24),
- at least one injection nozzle for injecting plastic material into the mold cavity (10) and
- a conveying tool (50) for transporting the second mold halves (24) into, through and out of the molding device (40), wherein the conveying tool (50) comprises
- a base level supporting plate (52) comprising at least three parts,
wherein a middle part of the base level supporting plate (52) which is located inside of the molding device (40) is movable independently from the two side parts which are located outside of the molding device (40),
**characterized in that** the conveying tool (50) further comprises at least one sliding unit (54) which is arranged at one of the side parts of the base level supporting plate (52), wherein the sliding unit (54) is arranged on the conveying tool (50) **in that** the free space between the sliding unit (54) and the position of the second mold half (24) inside of the molding device (40) is twice or multiple the area covered by one second mold half (24) arranged on the conveying tool (50), and wherein the second mold halves (24) are arranged in direct contact to each other on the conveying tool (50).

2. A molding device (40) for manufacturing of at least one injected plastic object (16) comprising
- at least one mold (20) comprising a first mold half (22) and a second mold half (24) forming a mold cavity (10), wherein the second mold half (24) is carried by a carrier (32)
- at least one additional second mold half (24), wherein the at least one additional second mold half (24) is carried by an additional carrier (32),
- at least one injection nozzle for injecting plastic material into the mold cavity (10) and
- a conveying tool (50) for transporting the carriers (32) carrying the second mold halves (24) into, through and out of the molding device (40), wherein the conveying tool (50) comprises
- a base level supporting plate (52) comprising at least three parts,
wherein a middle part of the base level supporting plate (52) which is located inside of the molding device (40) is movable independently from the two side parts which are located outside of the molding device (40),
**characterized in that** the conveying tool (50) further comprises at least one sliding unit (54) which is arranged at one of the side parts of the base level supporting plate (52), wherein the sliding unit (54) is arranged on the conveying tool (50) **in that** the free space between the sliding unit (54) and the position of the carrier (32) carrying the second mold half (24) inside of the molding device (40) is twice or multiple the area covered by one carrier (32) arranged on the conveying tool (50), and wherein the carriers (32) carrying the second mold halves (24) are arranged in direct contact to each other on the conveying tool (50).

3. The molding device (40) according to anyone of the preceding claims, wherein the base level supporting plate (52) is a rail or a splint system.

4. The molding device (40) according to anyone of the preceding claims, wherein the middle part of the base level supporting plate (52) which is located inside the molding device (40) is a pressure plate (38).

5. The molding device (40) according to anyone of the preceding claims, wherein a sliding unit (54) is arranged on both sides of the molding device (40) on the base level supporting plate (52).

6. The molding device (40) according to the preceding claim, wherein at least one of the sliding units (54) is a translocation unit (56) suitable to remove the second mold halves (24) from the conveying tool (50).

7. The molding device (40) according to anyone of the preceding claims, wherein the base level supporting plate (52) is arranged horizontally, vertically or inclined in the molding tool (40).

8. The molding device (40) according to anyone of the preceding claims, wherein the carrier (32) is a base plate.

9. Method of transferring at least one second mold half (24) into, through and out of a molding device (40) using a conveying tool (50) having a base level supporting plate (52) comprising at least three parts, wherein a middle part of the base level supporting plate (52) which is located inside of the molding device (40) is movable independently from the two side parts which are located outside of the molding device (40), comprising
- placing two or more second mold halves (24) or second mold halves (24) being carried by two or more carriers (32) on the conveying tool (50) into a free space between a sliding unit (54) arranged on the conveying tool (50) and the molding device (40) so that at least a first second mold half (24) or a first carrier (32) is located adjacent to the molding device (40), a second second mold half (24) or a second carrier (32) is located adjacent to the sliding unit (54) and all second mold halves (24) or all carriers (32) arranged on the conveying tool (50) are in direct contact to each other, wherein the free space between the sliding unit (54) and the position of the second mold half (24) or of the carrier (32) carrying the second mold half (24) inside of the molding device (40) is twice or multiple the area covered by one second mold half (24) or one carrier (32), respectively,
- transferring the first second mold half (24) or the first carrier (32) into the molding device (40) by moving the sliding unit (54) a predefined distance in the direction of the molding device (40), wherein the predefined distance is the area covered by one second mold half (24) or one carrier (32) carrying at least one second mold half (24) on the conveying tool (50),
- removing the first second mold half (24) or the first carrier (32) from the molding device (40) by moving the sliding unit (54) an additional predefined distance in the direction of the molding device (40) so that the first second mold half (24) or the first carrier (32) is removed from the molding device (40), and the second second mold half (24) or the second carrier (32) is moved into the molding device (40), wherein the additional predefined distance is the area covered by one second mold half (24) or one carrier (32) carrying at least one second mold half (24) on the conveying tool (50).

10. The method according to claim 9, wherein the second mold half (24) or the carrier (32) is grasped by a translocation unit (56) during removing it from the molding device (40).

11. The method according to anyone of claims 9 to 10, wherein the second mold half (24) is positioned into the molding position inside the molding device (40).

12. The method according to claim 11, wherein the step of positioning the second mold half (24) into the molding position comprises transferring the second mold half (24) to another level compared to the level onto the second mold half (24) is translocated.

13. The method according to anyone of claims 9 to 12, wherein the second mold half (24) carries at least one cleaning element (12) to be over-molded in the molding device (40) to produce a toothbrush or a part thereof.

14. The method according to anyone of claims 9 to 13, wherein a molding device (40) according to anyone of claims 1 to 8 is used.

## Patentansprüche

1. Formvorrichtung (40) zur Herstellung mindestens eines Kunststoffspritzteils (16), umfassend:
- mindestens eine Form (20) mit einer ersten Formhälfte (22) und einer zweiten Formhälfte (24), die einen Formhohlraum (10) bilden,
- mindestens eine zusätzliche zweite Formhälfte (24),
- mindestens eine Einspritzdüse zum Einspritzen von Kunststoffmaterial in den Formhohlraum (10) und
- ein Förderwerkzeug (50) zum Transportieren der zweiten Formhälften (24) in, durch die und aus der Formvorrichtung (40), wobei das Förderwerkzeug (50) umfasst:
- eine Basisniveau-Trägerplatte (52) mit mindestens drei Teilen, wobei ein mittlerer Teil der Basisniveau-Trägerplatte (52), der sich innerhalb der Formvorrichtung (40) befindet, unabhängig von den beiden Seitenteilen bewegbar ist, die sich außerhalb der Formvorrichtung (40) befinden,
**dadurch gekennzeichnet, dass** das Förderwerkzeug (50) ferner mindestens eine Verschiebeeinheit (54) umfasst, die an einem der Seitenteile der Basisniveau-Trägerplatte (52) angeordnet ist, wobei die Verschiebeeinheit (54) insofern auf dem Förderwerkzeug (50) angeordnet ist, als der freie Raum zwischen der Verschiebeeinheit (54) und der Position der zweiten Formhälfte (24) innerhalb der Formvorrichtung (40) das Doppelte oder Mehrfache der Fläche ist, die von einer zweiten Formhälfte (24) abgedeckt wird, die auf dem Förderwerkzeug (50) angeordnet ist, und wobei die zweiten Formhälften (24) in direktem Kontakt miteinander auf dem Förderwerkzeug (50) angeordnet sind.

2. Formvorrichtung (40) zur Herstellung mindestens eines Kunststoffspritzteils (16), umfassend:
- mindestens eine Form (20), die eine erste Formhälfte (22) und eine zweite Formhälfte (24) umfasst, die einen Formhohlraum (10) bilden, wobei die zweite Formhälfte (24) von einem Träger (32) getragen wird
- mindestens eine zusätzliche zweite Formhälfte (24), wobei die mindestens eine zusätzliche zweite Formhälfte (24) von einem zusätzlichen Träger (32) getragen wird,
- mindestens eine Einspritzdüse zum Einspritzen von Kunststoffmaterial in den Formhohlraum (10) und
- ein Förderwerkzeug (50) zum Transportieren der Träger (32), welche die zweiten Formhälften (24) tragen, in, durch die und aus der Formvorrichtung (40), wobei das Förderwerkzeug (50) umfasst:
- eine Basisniveau-Trägerplatte (52) mit mindestens drei Teilen, wobei ein mittlerer Teil der Basisniveau-Trägerplatte (52), der sich innerhalb der Formvorrichtung (40) befindet, unabhängig von den beiden Seitenteilen bewegbar ist, die sich außerhalb der Formvorrichtung (40) befinden,
**dadurch gekennzeichnet, dass** das Förderwerkzeug (50) ferner mindestens eine Verschiebeeinheit (54) umfasst, die an einem der Seitenteile der Basisniveau-Trägerplatte (52) angeordnet ist, wobei die Verschiebeeinheit (54) insofern auf dem Förderwerkzeug (50) angeordnet ist, als der freie Raum zwischen der Verschiebeeinheit (54) und der Position des Trägers (32), der die zweite Formhälfte (24) innerhalb der Formvorrichtung (40) trägt, das Doppelte oder Mehrfache der Fläche ist, die von einem Träger 32) abgedeckt wird, der auf dem Förderwerkzeug (50) angeordnet ist, und wobei die Träger (32), die die zweiten Formhälften (24) tragen, in direktem Kontakt miteinander auf dem Förderwerkzeug (50) angeordnet sind.

3. Formvorrichtung (40) nach einem der vorhergehenden Ansprüche, wobei die Basisniveau-Trägerplatte (52) ein Gleis oder ein Schienensystem ist.

4. Formvorrichtung (40) nach einem der vorhergehenden Ansprüche, wobei der Mittelteil der Basisniveau-Trägerplatte (52), der sich innerhalb der Formvorrichtung (40) befindet, eine Druckplatte (38) ist.

5. Formvorrichtung (40) nach einem der vorhergehenden Ansprüche, wobei eine Verschiebeeinheit (54) auf beiden Seiten der Formvorrichtung (40) auf der Basisniveau-Trägerplatte (52) angeordnet ist.

6. Formvorrichtung (40) nach dem vorhergehenden Anspruch, wobei mindestens eine der Verschiebeeinheiten (54) eine Verlagerungseinheit (56) ist, die geeignet ist, die zweiten Formhälften (24) vom Förderwerkzeug (50) weg zu bewegen.

7. Formvorrichtung (40) nach einem der vorhergehenden Ansprüche, wobei die Basisniveau-Trägerplatte (52) horizontal, vertikal oder geneigt in dem Formwerkzeug (40) angeordnet ist.

8. Formvorrichtung (40) nach einem der vorhergehenden Ansprüche, wobei der Träger (32) eine Basisplatte ist.

9. Verfahren zum Überführen mindestens einer zweiten Formhälfte (24) in, durch eine und aus einer Formvorrichtung (40) mittels eines Förderwerkzeugs (50) mit einer Basisniveau-Trägerplatte (52) mit mindestens drei Teilen, wobei ein mittlerer Teil der Basisniveau-Trägerplatte (52), der sich innerhalb der Formvorrichtung (40) befindet, unabhängig von den beiden Seitenteilen bewegbar ist, die sich außerhalb der Formvorrichtung (40) befinden.
umfassend
- Platzieren von zwei oder mehr zweite Formhälften (24) oder von zweiten Formhälften (24), die von zwei oder mehr Trägern (32) auf dem Förderwerkzeug (50) getragen werden, in einem freien Raum zwischen einer Verschiebeeinheit (54), die auf dem Förderwerkzeug (50) angeordnet ist, und der Formvorrichtung (40), sodass mindestens eine erste zweite Formhälfte (24) oder ein erster Träger (32) angrenzend an die Formvorrichtung (40) angeordnet ist, eine zweite zweite Formhälfte (24) oder ein zweiter Träger (32) angrenzend an die Verschiebeeinheit (54) angeordnet ist und alle zweiten Formhälften (24) oder alle Träger (32), die auf dem Förderwerkzeug (50) angeordnet sind, in direktem Kontakt miteinander stehen, wobei der freie Raum zwischen der Verschiebeeinheit (54) und der Position der zweiten Formhälfte (24) oder dem Träger (32), der die zweite Formhälfte (24) trägt, innerhalb der Formvorrichtung (40) das Doppelte oder Mehrfache der Fläche ist, die von einer zweiten Formhälfte (24) bzw. einem Träger (32) abgedeckt wird.
- Übertragen der ersten zweiten Formhälfte (24) oder des ersten Trägers (32) in die Formvorrichtung (40) durch Bewegen der Verschiebeeinheit (54) über eine vorgegebene Strecke in Richtung der Formvorrichtung (40), wobei die vorgegebene Strecke die Fläche ist, die von einer zweiten Formhälfte (24) oder einem Träger (32), der mindestens eine zweite Formhälfte (24) trägt, auf dem Förderwerkzeug (50) abgedeckt wird,
- Entfernen der ersten zweiten Formhälfte (24) oder des ersten Trägers (32) von der Formvorrichtung (40) durch Bewegen der Verschiebeeinheit (54) über eine zusätzliche vorgegebene Strecke in Richtung der Formvorrichtung (40), sodass die erste zweite Formhälfte (24) oder der erste Träger (32) von der Formvorrichtung (40) entfernt werden und die zweite zweite Formhälfte (24) oder der zweite Träger (32) in die Formvorrichtung (40) bewegt wird, wobei die zusätzliche vorgegebene Strecke die Fläche ist, von jeweils einer zweiten Formhälfte (24) oder von jeweils einem Träger (32), der mindestens eine zweite Formhälfte (24) trägt, auf dem Förderwerkzeug (50) abgedeckt wird.

10. Verfahren nach Anspruch 9, wobei die zweite Formhälfte (24) oder der Träger (32) von einer Verschiebeeinheit (56) gegriffen wird, während sie bzw. er von der Formvorrichtung (40) entfernt wird.

11. Verfahren nach einem der Ansprüche 9 bis 10, wobei die zweite Formhälfte (24) in der Formposition in der Formvorrichtung (40) positioniert wird.

12. Verfahren nach Anspruch 11, wobei der Schritt des Positionierens der zweiten Formhälfte (24) in der Formposition das Übertragen der zweiten Formhälfte (24) auf ein im Vergleich zu dem Niveau, auf das die zweiten Formhälfte (24) verlagert wird, anderen Niveau verlagert wird.

13. Verfahren nach einem der Ansprüche 9 bis 12, wobei die zweite Formhälfte (24) mindestens ein Reinigungselement (12) trägt, das in der Formvorrichtung (40) überformt werden soll, um eine Zahnbürste oder einen Teil davon zu erzeugen.

14. Verfahren nach einem der Ansprüche 9 bis 13, wobei eine Formvorrichtung (40) nach einem der Ansprüche 1 bis 8 verwendet wird.

## Revendications

1. Dispositif de moulage (40) pour la fabrication d'au moins un objet plastique injecté (16) comprenant :
- au moins un moule (20) comprenant une première moitié de moule (22) et une seconde moitié de moule (24) formant une cavité de moule (10) ;
- au moins une seconde moitié de moule supplémentaire (24),
- au moins une buse d'injection pour injecter un matériau plastique dans la cavité de moule (10) et
- un outil de transport (50) pour transporter les secondes moitiés de moule (24) dans, à travers et hors du dispositif de moulage (40), dans lequel l'outil de transport (50) comprend
- une plaque de support de niveau de base (52) comprenant au moins trois parties, dans lequel une partie médiane de la plaque de support de niveau de base (52) qui est située à l'intérieur du dispositif de moulage (40) peut être déplacée indépendamment des deux parties latérales qui sont situées à l'extérieur du dispositif de moulage (40),
**caractérisé en ce que** l'outil de transport (50) comprend en outre au moins une unité coulissante (54) qui est agencée au niveau d'une des parties latérales de la plaque de support de niveau de base (52), dans lequel l'unité coulissante (54) est agencée sur l'outil de transport (50) **en ce que** l'espace libre entre l'unité coulissante (54) et la position de la seconde moitié de moule (24) à l'intérieur du dispositif de moulage (40) est égal à deux fois, ou plus, la surface couverte par une seconde moitié de moule (24) agencée sur l'outil de transport (50), et dans lequel les secondes moitiés de moule (24) sont agencées en contact direct l'une par rapport à l'autre sur l'outil de transport (50).

2. Dispositif de moulage (40) pour la fabrication d'au moins un objet plastique injecté (16) comprenant :
- au moins un moule (20) comprenant une première moitié de moule (22) et une seconde moitié de moule (24) formant une cavité de moule (10), dans lequel la seconde moitié de moule (24) est portée par un support (32) ;
- au moins une seconde moitié de moule (24) supplémentaire, dans lequel l'au moins une seconde moitié de moule (24) supplémentaire est portée par un support (32) supplémentaire,
- au moins une buse d'injection pour injecter un matériau plastique dans la cavité de moule (10) et
- un outil de transport (50) pour transporter les supports (32) portant les secondes moitiés de moule (24) dans, à travers et hors du dispositif de moulage (40), dans lequel l'outil de transport (50) comprend
- une plaque de support de niveau de base (52) comprenant au moins trois parties, dans lequel une partie médiane de la plaque de support de niveau de base (52) qui est située à l'intérieur du dispositif de moulage (40) peut être déplacée indépendamment des deux parties latérales qui sont situées à l'extérieur du dispositif de moulage (40),
**caractérisé en ce que** l'outil de transport (50) comprend en outre au moins une unité coulissante (54) qui est agencée au niveau d'une des parties latérales de la plaque de support de niveau de base (52), dans lequel l'unité coulissante (54) est agencée sur l'outil de transport (50) **en ce que** l'espace libre entre l'unité coulissante (54) et la position du support (32) portant la seconde moitié de moule (24) à l'intérieur du dispositif de moulage (40) est égal à deux fois, ou plus, la surface couverte par un support (32) agencé sur l'outil de transport (50), et dans lequel les supports (32) portant les secondes moitiés de moule (24) sont agencés en contact direct l'un par rapport à l'autre sur l'outil de transport (50).

3. Dispositif de moulage (40) selon l'une quelconque des revendications précédentes, dans lequel la plaque de support de niveau de base (52) est un rail ou un système de gouttière.

4. Dispositif de moulage (40) selon l'une quelconque des revendications précédentes, dans lequel la partie médiane de la plaque de support de niveau de base (52) qui est située à l'intérieur du dispositif de moulage (40) est une plaque de pression (38).

5. Dispositif de moulage (40) selon l'une quelconque des revendications précédentes, dans lequel une unité coulissante (54) est disposée de part et d'autre du dispositif de moulage (40) sur la plaque de support de niveau de base (52).

6. Dispositif de moulage (40) selon la revendication précédente, dans lequel au moins l'une des unités coulissantes (54) est une unité de translocation (56) adaptée pour retirer les secondes moitiés de moule (24) de l'outil de transport (50).

7. Dispositif de moulage (40) selon l'une quelconque des revendications précédentes, dans lequel la plaque de support de niveau de base (52) est agencée horizontalement, verticalement ou inclinée dans l'outil de moulage (40).

8. Dispositif de moulage (40) selon l'une quelconque des revendications précédentes, dans lequel le support (32) est une plaque de base.

9. Procédé de transfert d'au moins une seconde moitié de moule (24) dans, à travers et hors d'un dispositif de moulage (40) en utilisant un outil de transport (50) ayant une plaque de support de niveau de base (52) comprenant au moins trois parties, dans lequel une partie médiane de la plaque de support de niveau de base (52) qui est située à l'intérieur du dispositif de moulage (40) peut être déplacée indépendamment des deux parties latérales qui sont situées à l'extérieur du dispositif de moulage (40), comprenant
- un positionnement de deux ou plusieurs secondes moitiés de moule (24) ou de secondes moitiés de moule (24) étant portées par deux ou plusieurs supports (32) sur l'outil de transport (50) dans un espace libre entre une unité coulissante (54) agencée sur l'outil de transport (50) et le dispositif de moulage (40) de telle sorte qu'au moins une première seconde moitié de moule (24) ou un premier support (32) est situé adjacent au dispositif de moulage (40), une seconde moitié de moule (24) ou un deuxième support (32) est situé adjacent à l'unité coulissante (54) et l'ensemble des secondes moitiés de moule (24) ou des supports (32) agencés sur l'outil de transport (50) sont en contact direct les uns avec les autres, dans lequel l'espace libre entre l'unité coulissante (54) et la position de la seconde moitié de moule (24) ou du support (32) portant la seconde moitié de moule (24) à l'intérieur du dispositif de moulage (40) est égal à deux fois, ou plus, la surface couverte par une seconde moitié de moule (24) ou un support (32), respectivement,
- un transfert de la première seconde moitié de moule (24) ou du premier support (32) dans le dispositif de moulage (40) en déplaçant l'unité coulissante (54) d'une distance prédéfinie dans la direction du dispositif de moulage (40), dans lequel la distance prédéfinie est la surface couverte par une seconde moitié de moule (24) ou un support (32) portant au moins une seconde moitié de moule (24) sur l'outil de transport (50),
- un retrait de la première seconde moitié de moule (24) ou du premier support (32) du dispositif de moulage (40) en déplaçant l'unité coulissante (54) d'une distance prédéfinie supplémentaire dans la direction du dispositif de moulage (40) de telle sorte que la première seconde moitié de moule (24) ou le premier support (32) est retiré du dispositif de moulage (40), et la deuxième seconde moitié de moule (24) ou le deuxième support (32) est déplacé dans le dispositif de moulage (40), dans lequel la distance prédéfinie supplémentaire est la surface couverte par une seconde moitié de moule (24) ou un support (32) portant au moins une seconde moitié de moule (24) sur l'outil de transport (50).

10. Procédé selon la revendication 9, dans lequel la seconde moitié de moule (24) ou le support (32) est saisi par une unité de translocation (56) pendant son retrait du dispositif de moulage (40).

11. Procédé selon l'une quelconque des revendications 9 à 10, dans lequel la seconde moitié de moule (24) est positionnée dans la position de moulage à l'intérieur du dispositif de moulage (40).

12. Procédé selon la revendication 11, dans lequel l'étape de positionnement de la seconde moitié de moule (24) dans la position de moulage comprend le transfert de la seconde moitié de moule (24) à un autre niveau comparé au niveau sur lequel la seconde moitié de moule (24) est translocalisée.

13. Procédé selon l'une quelconque des revendications 9 à 12, dans lequel la seconde moitié de moule (24) porte au moins un élément de nettoyage (12) destiné à être surmoulé dans le dispositif de moulage (40) pour produire une brosse à dents ou une partie de celle-ci.

14. Procédé selon l'une quelconque des revendications 9 à 13, dans lequel un dispositif de moulage (40) selon l'une quelconque des revendications 1 à 8 est utilisé.
